# EUROPÄISCHE PATENTSCHRIFT

(11) **EP 2 299 201 B1**
(45) Veröffentlichungstag und Bekanntmachung des Hinweises auf die Patenterteilung: **29.08.2012**
(21) Anmeldenummer: 09012039.5
(22) Anmeldetag: 22.09.2009
(51) Int. Cl.: F24H 3/04, F24H 9/18, H05B 3/24

(54) **Elektrische Heizvorrichtung**
Electric heating device
Dispositif de chauffage électrique

(43) Veröffentlichungstag der Anmeldung: 23.03.2011
(73) Patentinhaber: Eberspächer catem GmbH & Co. KG, 76863 Herxheim (DE)
(72) Erfinder: Bohlender, Franz, 76870 Kandel (DE); Niederer, Michael, 76889 Kapellen Drusweiler (DE); Reiß, Holger, 76764 Rheinzabern (DE)
(74) Vertreter: Grünecker, Kinkeldey, Stockmair & Schwanhäusser

(56) Entgegenhaltungen:
- DE-A1- 19 811 629

## Beschreibung

Die vorliegende Erfindung betrifft eine elektrische Heizvorrichtung insbesondere für ein Kraftfahrzeug mit einem Gehäuse, in dem wenigstens ein wärmeerzeugendes Element und mehrere in parallelen Schichten angeordnete wärmeabgebende Elemente angeordnet sind. In dem Gehäuse können mehrere wärmeerzeugende Elemente vorgesehen sein. Üblicherweise sind zu einem wärmeerzeugenden Element zwei wärmeabgebende Elemente vorgesehen, die an gegenüberliegenden Seiten des wärmeerzeugenden Elementes angelegt gehalten sind, um die von dem wärmeerzeugenden Element erzeugte Wärme an das zu erwärmende Medium abzuführen. So werden die wärmerabgebenden Elemente auch als Radiatorelemente bezeichnet, insbesondere dann, wenn eine Wärmabgabe an Luft gewünscht ist.

Die wärmeerzeugenden Elemente umfassen wenigstens ein PTC-Element, an dessen gegenüberliegenden Seitenflächen elektrische Leiterbahnen anliegen, durch welche das PTC-Element bestromt wird.

Gattungsbildende elektrische Heizvorrichtungen dienen insbesondere der Erwärmung von Luft zur Klimatisierung des Fahrzeuginnenraumes und werden verstärkt eingesetzt, um mit der verminderten Wärmeabgabe moderner Dieselmotoren verbundene Nachteile zu kompensieren, die darin zu sehen sind, dass insbesondere in der frühen Betriebsphase des Motors nicht hinreichend Wärme zur Verfügung steht, um den Fahrzeuginnenraum zu erwärmen, bzw. die Frontscheibe frei von Beschlag zu halten.

Eine gattungsgemäße elektrische Heizvorrichtung ist beispielsweise aus der EP-A1-1 768 458 bekannt. Die dort beschriebene elektrische Heizvorrichtung weist eine erhöhte elektrische Durchschlagsfestigkeit auf und eignet sich insbesondere für den Hochvoltbetrieb. Bei diesem Stand der Technik sind an der Außenseite der Leiterbahnen jeweils eine Isolierung in Form einer Isolierschicht vorgesehen, so dass die wärmeabgebenden Elemente unter Zwischenlage der Isolierschicht an dem zugeordneten wärmeerzeugenden Element anliegen und potentialfrei sind. Ein auf der elektrischen Heizvorrichtung aufliegender elektrisch leitender Fremdkörper, der beispielsweise an gegenüberliegenden Seiten des wärmeerzeugenden Elementes anliegende wärmeabgebende Elemente berührt, führt daher zu keinem Kurzschluss.

Das Dokument DE 198 11629 A1 offenbart den Oberbegriff des Anspruchs 1.

Der vorliegenden Erfindung liegt das Problem zugrunde, eine elektrische Heizvorrichtung der eingangs genannten Art anzugeben, die den praktischen Anforderungen, insbesondere bei einem Hochvoltbetrieb in verbesserter Weise gerecht werden kann.

Zur Lösung dieses Problems wird mit der vorliegenden Erfindung eine elektrische Heizvorrichtung mit den Merkmalen von Anspruch 1 vorgeschlagen. Diese unterscheidet sich von dem zuvor genannten gattungsbildenden Stand der Technik dadurch, dass das Gehäuse aus Kunstoff ist.

Mit der vorliegenden Erfindung ist die Möglichkeit geschaffen, mehrere zwischen sich wenigstens ein wärmeerzeugendes Element einschließende wärmeabgebende Elemente elektrisch miteinander zu verbinden. Diese elektrische Verbindung erfolgt üblicherweise innerhalb des Gehäuses und durch das Leiterelement, welches an dem Gehäuse gehalten ist. Das Leiterelement verbindet mehrere, vorzugsweise sämtliche wärmeabgebende Elemente der elektrischen Heizvorrichtung. Die wärmeabgebenden Elemente erstrecken sich üblicherweise streng parallel zu den wärmeerzeugenden Elementen, die die stromführenden Leiterbahnen umfassen. Dementsprechend wirken die elektrisch miteinander verbundenen und von den stromführenden Bahnen entkoppelten wärmeabgebenden Elemente als Abschirmung. Diese Abschirmung ist durch die zwischen dem wärmeerzeugenden und dem wärmeabgebenden Element vorgesehene elektrische Isolierung elektrisch von den wärmeabgebenden Elementen entkoppelt. Besonders wirksam ist die Abschirmung dann, wenn der Heizblock außenseitig von wärmeabgebenden Elementen umgeben ist.

Als Heizblock wird üblicherweise ein Schichtaufbau aus wenigstens einem wärmeerzeugenden Element und daran anliegenden wärmeabgebenden Elementen verstanden. Abhängig von der zu erzeugenden Heizleistung können mehrere parallele Schichten von wärmeerzeugenden Elementen von dem Heizblock umfasst sein. Der Heizblock wird zur Verwirklichung der vorliegenden Erfindung vorzugsweise unter der Vorspannung einer in dem Gehäuse angeordneten Feder an diesen gehalten. Das Gehäuse ist ein den Heizblock rahmenförmig umgebendes Gehäuse aus Kunststoff.

Die Abschirmung ist bereits sehr wirksam mit lediglich einem stirnseitig des Heizblocks vorgesehenen Leiterelement, welches üblicherweise sich quer zu den Lagen des Heizblocks erstreckt und an die wärmeabgebenden Elemente angebunden ist. Es können aber auch zwei Leiterelemente an gegenüberliegenden Stirnseiten des Heizblocks vorgesehen sein. An den Stirnseiten liegen die freien Enden der Lagen des Schichtaufbaus. Es wird davon ausgegangen, dass das Gehäuse ein elektrisch gut isolierendes Kunststoffgehäuse ist. Des weiteren hat die vorliegende Erfindung insbesondere Hochvoltanwendungen im Blick, bei denen die elektrische Heizvorrichtung mit Spannungen von bis zu 500 V beaufschlagt wird und/oder eine elektrische Leistung von deutlich über den heutzutage üblichen 2 kW abgibt, wie beispielsweise Leistungen von zwischen 3 und 6 kW, maximal bis etwa 10 kW. Solche Betriebsbedingungen für elektrische Heizvorrichtungen sind insbesondere in einem modernen Elektrofahrzeug denkbar, speziell dann, wenn die elektrische Heizvorrichtung von der Energiequelle gespeist wird, die auch den elektrischen Antrieb des Fahrzeuges versorgt.

Die vorliegende Erfindung bietet die Möglichkeit, Steuerkomponenten einer Steuerung, die in baulicher Einheit mit der elektrischen Heizvorrichtung vorgesehen ist, mit einer Abschirmung zu versehen, die elektrisch mit dem Leiterelement verbunden ist. Danach wird nicht nur der Heizblock, sondern auch die Steuervorrichtung abgeschirmt. Vorzugsweise ist das Leiterelement bzw. die Abschirmung zu der Steuervorrichtung an das Massepotential eines Fahrzeuges anschließbar, beispielsweise durch einen an der Außenseite des Gehäuses vorgesehenen Massestecker.

Die Abschirmung des Heizblocks bzw. integral vorgesehener Steuerkomponenten ist nicht zuletzt im Hinblick auf die EMV-Problematik relevant. Bei elektrischen Heizvorrichtungen der gattungsgemäßen Art in einem Kraftfahrzeug werden üblicherweise hohe elektrische Leistungen geschaltet, was zu elektromagnetischen Störungen innerhalb des Kraftfahrzeuges führen kann. Durch Einbinden von einem, vorzugsweise mehreren, bevorzugt von sämtlichen wärmeabgebenden Elementen des Heizblocks an das Massepotential des Kraftfahrzeuges, können diese unerwünschten Effekte reduziert, wenn nicht gar eliminiert werden.

Gemäß einer bevorzugten Weiterbildung der vorliegenden Erfindung ist das Leiterelement aus einem Blechstreifen gebildet. Vorzugsweise ist das Leiterelement durch Stanzen und Biegen aus dem Blechstreifen ausgeformt. Dabei kann das Leiterelement Führungs- und Anlageflächen zur Befestigung des Leiterelementes an dem Gehäuse aufweisen. Durch die Ausbildung eines aus einem Blechstreifen gebildeten Leiterelementes kann dieses wirtschaftlich hergestellt und auf einfache Weise mit dem Gehäuse verbunden werden.

Im Hinblick auf eine bei Fahrzeugen grundsätzlich gewünschte Gewichtsreduzierung wird gemäß einer bevorzugten Weiterbildung der vorliegenden Erfindung vorgeschlagen, das Leiterelement mit einer sich quer zu den Schichten des Heizblocks erstreckenden Leiterelementbasis und mit von dieser abragenden und mit den wärmeabgebenden Elementen zusammenwirkenden Krallen auszubilden. Diese Krallen erstrecken sich parallel zu den Schichten des Heizblocks. Mit dieser bevorzugten Ausgestaltung ist das Leiterelement kammartig ausgebildet, jedenfalls dann, wenn eine Vielzahl von wärmeabgebenden Elementen als Teil der Heizvorrichtung vorgesehen sind. Die Leiterelementbasis dient dabei vorzugsweise der Ausbildung von Funktionsflächen und -elementen zur Fixierung des Leiterelementes an dem Gehäuse. Gegebenenfalls können auch durch Stanz- bzw. Biegebearbeitung ausgeformte Führungsflächen vorgesehen sein, welche mit Gegenflächen, die an dem Kunststoffgehäuse ausgeformt sind, zusammenwirken und das Positionieren des Leiterelementes bei der Montage der elektrischen Heizvorrichtung erleichtern. Die von der Leiterelementbasis abragenden Krallen sind für die elektrische Kontaktierung mit dem wärmeabgebenden Elementen optimiert ausgebildet. Jede einzelne Kralle wirkt üblicherweise mit je einem wärmeabgebenden Element zusammen.

Die wärmeabgebenden Elemente sind üblicherweise aus einem dünnen Blechband gebildet, welches mäandrierend gebogen ist, um eine Vielzahl von sich im wesentlichen quer zu den Lagen des Heizblocks erstreckende Rippen auszuformen. Das Blechmaterial zur Ausbildung der wärmeabgebenden Elemente ist üblicherweise ein gut Wärme leitendes Material, wie beispielsweise Kupfer bzw. Aluminium. Die Krallen sind gemäß einer bevorzugten Weiterbildung der vorliegenden Erfindung derart ausgeformt, dass diese bei Anlage an das wärmeabgebende Element selbiges plastisch verformen und sich daran anlegen. Eine solche plastische Verformung führt zu einer Erhöhung der Kontaktfläche zwischen der Kralle und dem zugeordneten wärmeabgebenden Element. Die plastische Verformung erfolgt üblicherweise beim Schließen des Gehäuses durch eine den Verschluss des Gehäuses bewirkende Schließkraft. Die Anlagefläche für das Leiterelement wird dabei vorzugsweise durch die Innenseite eines Querholmes gebildet, der die Luftdurchtrittsöffnung durch das Gehäuse begrenzt. Dieses hat üblicherweise zwei sich gegenüberliegende Durchtrittsöffnungen für die zu erwärmende Luft, zwischen denen der Heizblock freiliegt. Es wird davon ausgegangen, dass das Leiterelement sich an der Innenseite eines Gehäuses abstützt, welches auch die Lagen des Schichtaufbaus in Durchströmungsrichtung des Mediums durch die elektrische Heizvorrichtung abstützt. Es sind gegenüberliegende Anlageflächen für den Heizblock vorgesehen, die den Heizblock innerhalb des Gehäuses fixieren. Durch diese Halteflächen wird ein Anpressdruck aufgebaut, durch welchen die wärmeabgebenden Elemente unter plastischer Verformung an die Krallen angelegt werden.

Gemäß einer bevorzugten Weiterbildung der vorliegenden Erfindung, die eine einfache Montage der elektrischen Heizvorrichtung erlaubt, bildet das wenigstens eine Leiterelement mit dem Gehäuse eine vormontierte Einheit aus. In dieser vormontierten Einheit ist das Leiterelement an dem Gehäuse fixiert und in vorbestimmter Ausrichtung gehalten. Dazu umfasst das Leiterelement wenigstens ein aus der Ebene des Blechstreifens heraus gebogenes Rastelement, mit welchem das Leiterelement mit dem Gehäuse verbunden ist.

Sofern lediglich ein sich quer zu den Lagen des Heizblocks erstreckendes Leiterelement vorgesehen ist, befindet sich dieses vorzugsweise an einer Steuerseite des Gehäuses, an der eine Steuereinrichtung an dem Gehäuse befestigt ist. Das Leiterelement ist des weiteren mit einer Masseleitung verbunden, die zu der Steuereinrichtung führt. Diese Masseleitung erlaubt die Einbeziehung des elektrischen Wertes des Leiterelementes in die Steuerung der elektrischen Heizvorrichtung. So kann vorzugsweise als Teil der Steuereinrichtung ein Massewächter vorgesehen sein, der das Potential des Leiterelementes mit dem Massepotential des Fahrzeuges vergleicht, um einen eventuellen Defekt der elektrischen Isolierung zu detektieren und vorzugsweise im Falle eines solchen Defektes die elektrische Heizvorrichtung vollständig abzustellen. Mit dieser steuerungstechnisches Variante kann eine Gefährdung von Personen ausgeschlossen werden, die im Bereich der elektrischen Heizvorrichtung Montage- bzw. Reparaturarbeiten in der Meinung durchführen, die innerhalb der Luftdurchtrittsöffnung freiliegenden wärmeabgebenden Elemente seien potentialfrei. Denn üblicherweise werden die elektrisch leitenden Teile des Heizblocks in einem sogenannten Positionsrahmen aufgenommen, dessen seitliche Ränder sich parallel zu den Lagen des Heizblocks, jedoch außerhalb der durch den Heizblock aufgenommenen Ebene vorgesehen sind. Die Positionsrahmen bilden dementsprechend Ränder aus, die zwischen sich die Leiterblech und üblicherweise auch die Isolierung vorzugsweise in Form einer Keramik-Kunststoffschicht aufnehmen. Diese beidseitig an dem Positionsrahmen vorgesehenen Ränder der Positionsrahmen überdecken dementsprechend die elektrischen Leiterbahnen.

Das Einbinden der wärmeabgebenden Elemente in eine Steuereinrichtung bietet darüber hinaus die Möglichkeit, Fehlströme innerhalb der elektrischen Heizvorrichtung zu detektieren. Dabei wird davon ausgegangen, dass lediglich die Leiterbahnen mit unterschiedlicher Polarität bestromt werden und die wärmeabgebenden Elemente auf Masse liegen. Sollte die Steuereinrichtung hierzu Abweichungen feststellen, kann diese eine Fehlermeldung ausgeben. Die entsprechende Überprüfung kann auch anhand eines externen Steuergerätes erfolgen, welches beim Hersteller der elektrischen Heizvorrichtung betrieben wird und vor Auslieferung derselben unter Einbeziehung des Potentials der wärmeabgebenden Elemente eventuelle Montagefehler detektiert.

Weitere Einzelheiten der vorliegenden Erfindung ergeben sich aus der nachfolgenden Beschreibung eines Ausführungsbeispiels in Verbindung mit der Zeichnung. In dieser Zeichnung:
- Figur 1: eine Seitenansicht eines Ausführungsbeispiels,
- Figur 2: eine perspektivische Seitenansicht des in Figur 1 gezeigten Ausführungsbei- spiels von der gegenüberliegenden Seitenfläche;
- Figur 3: das in Figur 2 eingezeichnete Detail III in vergrößerter Darstellung;
- Figur 4: das in Figur 2 gezeigte Gehäuseteil vor dem Einbau des Heizblocks;
- Figur 5: die in Figur 4 dargestellte Einzelheit V in vergrößerter Darstellung; und
- Figur 6: eine Seitenansicht eines Heizblocks eines Ausführungsbeispiels zur Verdeut- lichung des elektrischen Anschlusses der einzelnen Elemente des Heizblocks im Sinne der vorliegenden Erfindung.

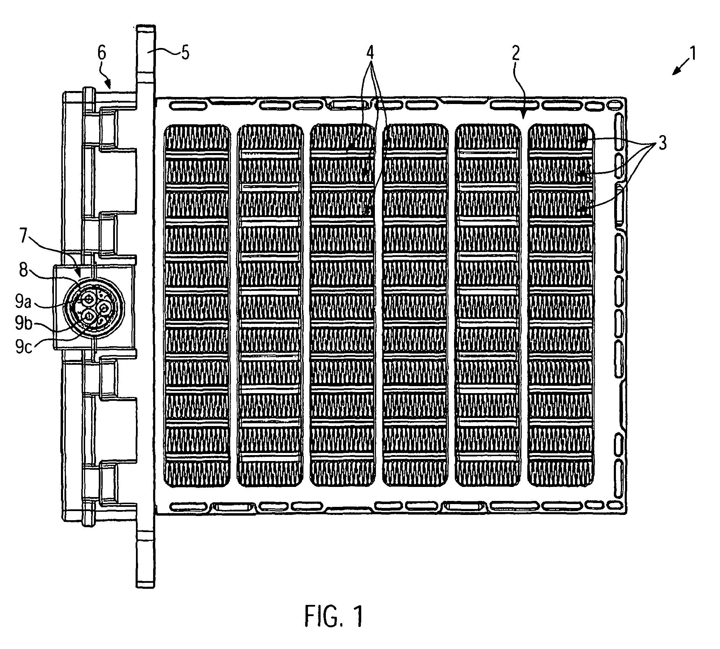

Die Figur 1 zeigt eine Seitenansicht eines Ausführungsbeispiels einer elektrischen Heizvorrichtung mit einem rahmenförmigen Gehäuse 1, welches aus zwei Kunststoffschalen gebildet ist und in sich einen Heizblock 2 aufnimmt. Der Heizblock 2 umfasst mehrere wärmeabgebende Elemente 3 und mehrere wärmeerzeugende Elemente 4, die in parallelen Schichten vorgesehen sind. Bei dem gezeigten Ausführungsbeispiel ist an jedenfalls einem Längsholm des rahmenförmigen Gehäuses 1 ein Federelement (nicht dargestellt) vorgesehen, welches den Heizblock 2 innerhalb des rahmenförmigen Gehäuses 1 unter Federvorspannung hält, so dass die Lagen des Schichtaufbaus gegeneinander gedrückt gehalten sind. Seitlich zu dem Heizblock 2 weist das Gehäuse 1 einen Befestigungsflansch 5 sowie einen den Befestigungsflansch 5 überragendes Steuergehäuse 6 auf. In diesem Steuergehäuse 6 befindet sich eine nicht mehr dargestellte elektrische Steuervorrichtung.

Das in Figur 1 dargestellte Ausführungsbeispiel kann mit Steuerkabeln und Leistungskabeln elektrisch an das Bordnetz und das Datennetz des Kraftfahrzeuges angeschlossen werden. Bei dem gezeigten Ausführungsbeispiel ist an dem Steuergehäuse 6 ein mit Bezugszeichen 7 gekennzeichneter Steckeranschluss für das Leistungskabel und für den Masseanschluss vorgesehen. Der Steckeranschluss weist nicht näher ausgeführte Befestigungs- und Führungsflächen aus Kunststoff für einen anzuschließenden Gegenstecker am Ende eines Leistungskabels auf. Das Leistungskabel hat eine umfänglich ausgebildete Abschirmung, die mit einem ringförmigen Masseanschluss 8 nach Herstellen der Steckverbindung elektrisch verbunden ist. Dieser ringförmige Masseanschluss 8 überragt das Steuergehäuse 6 und umgibt elektrische Anschlusselemente 9a bis 9c zum elektrischen Anschluss der Leistungskabel. Über in dem Gehäuse 1 ausgebildete Leitungsbahnen ist der Masseanschluss 8 mit den einzelnen wärmeabgebenden Elementen 3 verbunden. Die elektrischen Anschlusselemente 9a bis 9c werden über in dem Steuergehäuse 6 aufgenommene Leistungsschalter an einzelnen bzw. zu Gruppen zusammengefasste wärmeerzeugende Elemente 4 verbunden, um diese zu bestromen.

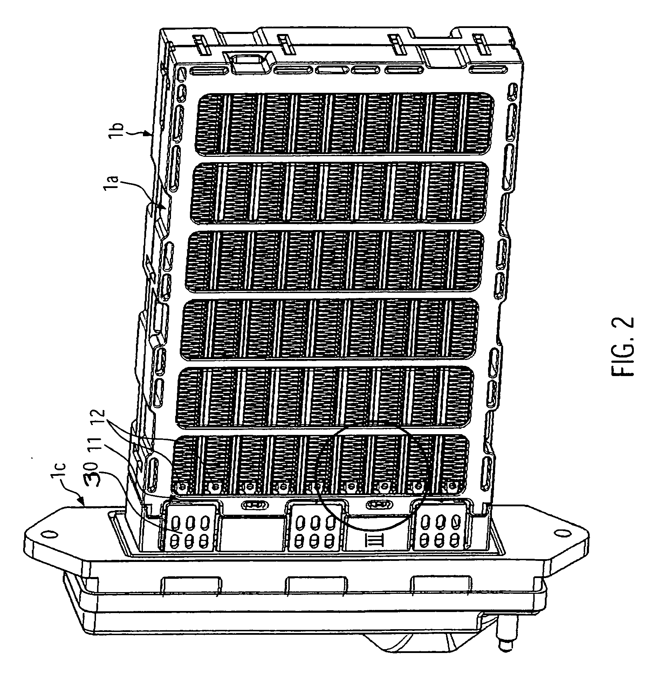

Die perspektivische Seitenansicht nach Figur 2 lässt den Aufbau des Gehäuses 1 deutlicher erkennen. Das Gehäuse 1 besteht aus zwei Gehäuseteilen 1 a, 1 b, die jeweils identisch ausgebildet sind und endseitig von dem Steuergehäuse 6 überragt werden. In dem Steuergehäuse 6 ist eine Steuereinrichtung für die elektrische Heizvorrichtung vorgesehen, die unter anderem elektronische Steuerkomponenten für das Steuern des Heizblocks 2 umfasst. Die durch die Steuerkomponenten erzeugte Abwärme wird über die mit Bezugszeichen 30 gekennzeichneten Kühlelemente an die den Heizblock 2 anströmende Luft abgeführt. Hierzu bildet das Gehäuse 1 seitlich neben den Öffnungen zu dem Heizblock 2 jeweils drei Durchströmungskanäle aus, die zu den Kühlelementen 30 führen. Ein benachbart zu den Kühlelementen 30 vorgesehener Querholm 11 des Gehäuses wird innenseitig durch ein Leiterelement 10 mit metallischen Krallen 12 überragt, die in etwa auf Höhe der Innenfläche des Gehäuseteiles 1a liegen und mit den wärmeabgebenden Elementen 3 zusammenwirken, derart, dass die Krallen 12 elektrisch mit den meandrierend gebogenen Blechstreifen des wärmeabgebenden Elementes 3 kontaktiert sind. Sämtliche wärmeabgebende Elemente 3 wirken mit einer entsprechenden Kralle 12 zusammen, d.h. sind über das Leiterelement 10 elektrisch miteinander verbunden.

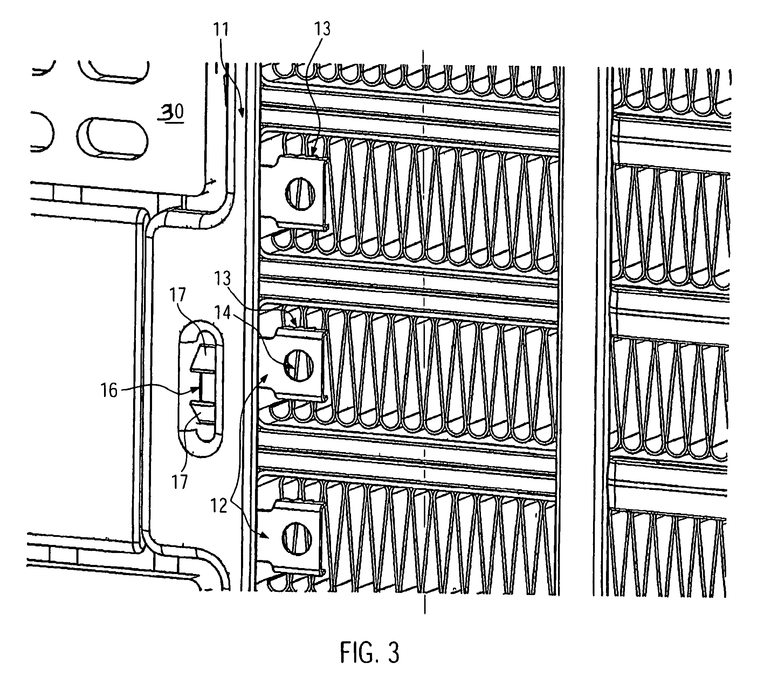

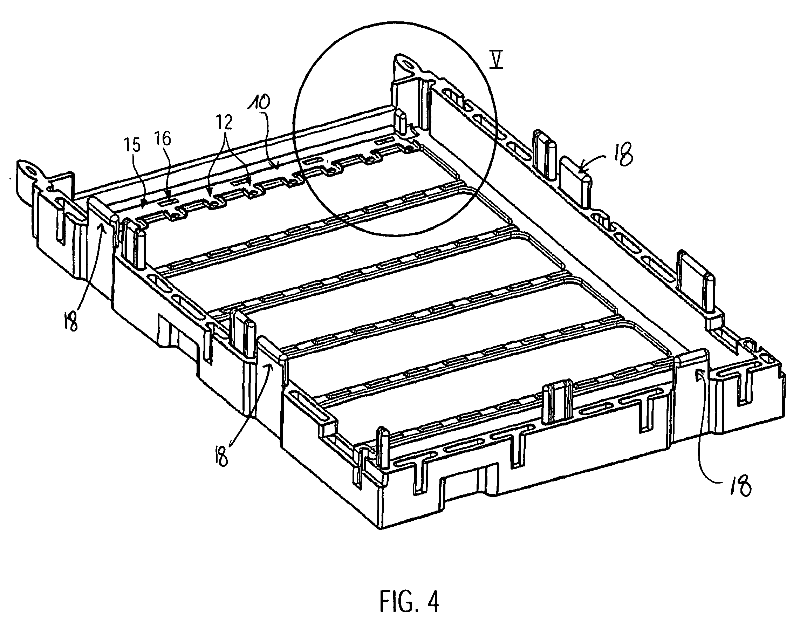

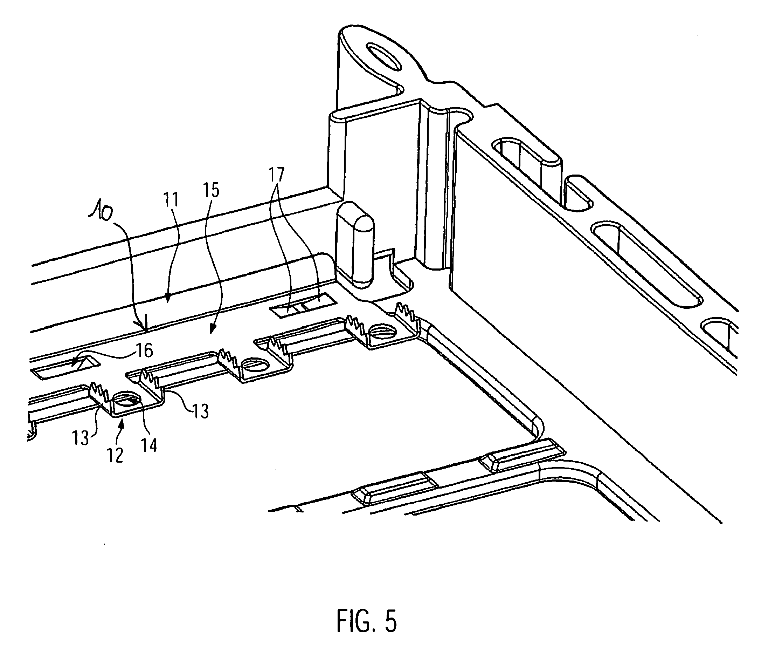

Wie insbesondere Figur 4 erkennen lässt, sind die Krallen 12 durch Stanzbearbeitung eines Blechbandes ausgeformt. Die Krallen 12 sind an der heizblockseitigen Längsseite des Blechbandes durch Stanzen freigeschnitten und durch eine Stanz-Biegeausformung mit seitlichen Zahnreihen 13 ausgeformt, die in Figur 3 zu erahnen und in Figur 5 zu erkennen sind. Diese Zahnreihen 13 weisen einen sich in durch Strömungsrichtung, d.h. rechtwinklig zu den Lagen des Heizblocks 2 erstreckenden Steg auf, von dem ein Zahnprofil abragt, welches mit den Wellrippen des wärmeabgebenden Elementes 3 zusammenwirkt. Zur Verminderung des durch die Krallen 12 bewirkten Strömungswiderstands ist mittig in den Krallen 12 eine Aussparung 14 vorgesehen.

Die Krallen 12 ragen von einer länglichen Leiterelementbasis 15 ab, die sich parallel zu dem Querholm 11 erstreckt und auf der Innenseite desselben anliegt. Zur Befestigung sind an dem Querholm 11 Rastausnehmungen 16 ausgespart. Diese Rastausnehmungen 16 befinden sich jeweils zwischen den Kühlelementen 30 (vgl. Figur 2). An der Leiterelementbasis 15 sind durch Stanzen und Biegen federnde Rastlaschen 17 ausgebildet. Die Leiterelementbasis 15 lässt sich dementsprechend durch Verklipsen und Zusammenwirken der Rastausnehmungen 16 mit den Rastlaschen 17 an dem Gehäuseteil 1 befestigen. Die Leiterelementbasis 15 ist üblicherweise über einen Kontaktsteg, der beispielsweise durch Stanzen und/oder Biegen ausgebildet sein kann, elektrisch mit Teilen des Steuergehäuses verbunden. Dort befindet sich üblicherweise auch ein Massewächter und/oder ein Fehlstrommesser, der üblicherweise mit der Leiterelementbasis 15 elektrisch verbunden ist.

In die in Figur 4 ersichtliche Einheit aus einem spritzgegossenen Kunststoffteil 1a und dem aus Blech gebildeten Leiterelement 10 bestehend aus der Leiterelementbasis 15 und den Krallen 12, wird der Heizblock 2 eingesetzt. Dabei wird jeweils ein wärmeabgebendes Element 3 auf jeweils eine Kralle 12 aufgesetzt. In das Gehäuseteil 1a wird des Weiteren wenigstens eine Feder eingesetzt, die den Heizblock, respektive die den Heizblock 2 bildenden Schichten nach der Endmontage der elektrischen Heizvorrichtung unter Vorspannung setzt, und zwar mit einer Federkraft, die quer zu den Lagen des Heizblocks 2 und innerhalb der Ebene des Heizblocks 2 wirkt.

Nachdem die Elemente des Heizblocks 2 und das wenigstens eine Federelement in das Gehäuseteil 1a eingebaut wurden, wird das Gehäuse 1 verschlossen. Bei diesem Schließen des Gehäuses federn mit Bezugszeichen 18 gekennzeichnete und an den Gehäuseteilen 1 a, 1 b vorgesehene Rastzungen ein, so dass die beiden Gehäuseteile 1 a, 1 b miteinander verbunden sind. Am Ende der Fügebewegung in Richtung des den Heizblock 2 durchströmenden Luftstromes werden die Krallen 12 mit ihren Zahnreihen 13 gegen die wärmeabgebenden Elemente gedrängt, die sich daraufhin jedenfalls teilweise plastisch verformen. Am Ende der Fügebewegung sind die Krallen 12 elektrisch zuverlässig mit den wärmeabgebenden Elementen 3 verbunden.

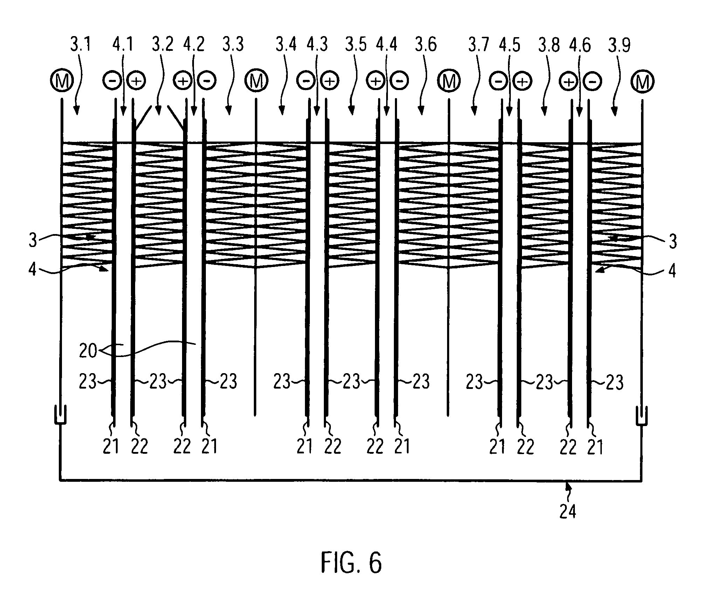

Die elektrische Zuordnung der einzelnen Elemente des Heizblocks 2 zu den Anschlusselementen 8, 9 ergibt sich aus der Darstellung in Figur 6. Diese zeigt schematisch einen Heizblock mit mehreren wärmeerzeugenden Elementen 4, die jeweils mit paralleler Ausrichtung relativ zueinander vorgesehen sind und jeweils zumindest ein PTC-Element 20 umfassen, welches zwischen Leiterbahnen 21, 22 angeordnet ist und über diese Leiterbahnen 21, 22 bestromt wird. An der Außenseite der Leiterbahnen 21, 22 befinden sich jeweils elektrisch isolierende Isolierschichten 23.

An den wärmeerzeugenden Elementen 4 liegen jeweils beidseitig die als Wellrippen ausgebildeten wärmeabgebenden Elemente 3 an. Wie die Figur 6 erkennen lässt, können sich zwei wärmeerzeugende Elemente 4.1, 4.2; 4.5, 4.6 jeweils ein wärmeabgebendes Element 3.2 bzw. 3.8 teilen. Ebenso gut können zwischen zwei benachbarten wärmeerzeugenden Elementen 4.2, 4.3 zwei identische wärmeabgebende Elemente 3.3, 3.4 vorgesehen sein.

Bei dem mit Figur 6 verdeutlichten Ausführungsbeispiel sind sämtliche wärmeerzeugende Elemente 4 jeweils außenseitig mit der Isolierschicht 23 belegt, so dass sämtliche wärmeabgende Elemente 3 potentialfrei vorgesehen sind. Über Masseanschlüsse, die über die Krallen 12 gebildet und in dem elektrischen Anschlussdiagramm gemäß Figur 6 mit Bezugszeichen M gekennzeichnet sind, sind die wärmeabgebenden Elemente 3 jeweils mit dem Masseanschluss 8 elektrisch verbunden. Entsprechendes gilt für die als Blechbänder ausgebildeten Leiterbahnen 21, 22 in Bezug auf die elektrischen Anschlusselemente 9a bis 9c für den Leistungsstrom. Die Leiterbahnen 21 sind jeweils an den Minus- bzw. Massepol und die Leiterbahnen 22 jeweils an den Pluspol einer Stromquelle angeschlossen. Dieser Anschluss erfolgt jedoch regelmäßig über Zwischenschaltung von Leistungsschaltern, die in dem Steuergehäuse 6 aufgenommen und über eine Logikschaltung in diesem schaltbar sind. In dem Gehäuse ist ferner ein nicht dargestellter Massewächter vorgesehen, der elektrisch mit sämtlichen Masseanschlüssen M verbunden ist und vorzugsweise einen Potentialabgleich zwischen diesen und dem Massanschluss 8 durchführt, um eventuelle Störungen einer Isolierschicht 23 zu ermitteln, die zu einem Potentialunterschied führen würde. Allerdings ist die Anordnung nach Figur 2 so gewählt, dass es selbst bei einer Störung der Isolierschicht noch nicht zu einem Kurzschluss kommt. So liegen die identischen Polaritäten unterschiedlicher und benachbarter wärmeerzeugender Elemente 4 jeweils einander gegenüber. Beiderseits der zwischen zwei wärmeerzeugenden Elementen 4 angeordneten wärmeabgebenden Elemente 3.2; 3.3, 3.4; 3.5; 3.6, 3.7 bzw. 3.8 und getrennt von den Isolierschichten 23 befinden sich demnach Blechbänder identischer Polarität.

In Figur 6 ist eine konkrete Ausgestaltung einer Abschirmung des Heizblocks 2 schematisch dargestellt, die durch ein Abschirmblech 24 gebildet ist, welche sich im wesentlichen rechtwinklig zu den Lagen des Heizblocks 2 erstreckt und mit den freien Enden der äußeren wärmeabgebenden Elemente 3.1 bzw. 3.9 verbunden ist. Ein entsprechendes Abschirmblech 14 kann derart vorgesehen sein, dass die Steuerelemente einer Steuervorrichtung sich innerhalb der Abschirmung befinden. Die Abschirmung kann beispielsweise auch als Teil eines Gehäusedeckels für das Steuergehäuse 6 ausgebildet und erst nach Schließen des Steuergehäuses 6 durch den Gehäusedeckel elektrisch mit den äußeren wärmeabgebenden Elementen 3.1 bzw. 3.9 verbunden sein.

### Bezugszeichenliste

- 1: Gehäuse
- 1a: Gehäuseteil
- 1 b: Gehäuseteil
- 2: Heizblock
- 3: wärmeabgendes Element
- 4: wärmeerzeugendes Element
- 5: Befestigungsflansch
- 6: Steuergehäuse
- 7: Steckeranschluss
- 8: Masseanschluss
- 9a bis 9c: Anschlusselement
- 10: Leiterelement
- 11: Querholm
- 12: Kralle
- 13: Zahnreihe
- 14: Aussparung
- 15: Leiterelementbasis
- 16: Rastausnehmungen
- 17: Rastlasche
- 18: Rastzunge
- 20: PTC-Element
- 21: Leiterbahn
- 22: Leiterbahn
- 23: Isolierschicht
- 24: Abschirmblech
- 30: Kühlelement
- M: Masseanschluss
- -: Minuspol des Leistungsstroms
- +: Pluspol des Leistungsstroms

## Patentansprüche

1. Elektrische Heizvorrichtung, insbesondere für ein Kraftfahrzeug, mit einem Gehäuse (1) , in dem wenigstens ein wärmeerzeugendes Element (4) mit wenigstens einem PTC-Element (20) und an gegenüberliegenden Seitenflächen des wenigstens einen PTC-Elementes (20) anliegenden elektrischen Leiterbahnen (21, 22) und mehrere in parallelen Schichten angeordnete wärmeabgebende Elemente (3) aufgenommen sind, die an gegenüberliegenden Seiten des wenigstens einen wärmeerzeugenden Elementes (4) unter Zwischenlage einer elektrischen Isolierung (23) angelegt gehalten sind, mit wenigstens einen Leiterelement (10), welches mehrere wärmeabgebende Elemente (3) elektrisch miteinander verbindent , **dadurch gekennzeichnet, dass** das Gechaüse um Kunststoff ist.

2. Elektrische Heizvorrichtung nach Anspruch 1, **dadurch gekennzeichnet, dass** das wenigstens eine Leiterelement (10) aus einem Blechstreifen gebildet ist.

3. Elektrische Heizvorrichtung nach Anspruch 1 oder 2, **dadurch gekennzeichnet, dass** das wenigstens eine Leiterelement (10) eine sich quer zu den Schichten erstreckende Leiterelementbasis (15) und von dieser abragende und mit den wärmeabgebenden Elementen zusammenwirkende Krallen (12) umfasst, die sich in parallel zu den Schichten erstrecken.

4. Elektrische Heizvorrichtung nach Anspruch 3, **dadurch gekennzeichnet, dass** die Kralle (12) das zugeordnete wärmeabgebende Element (3) plastisch verformend an diesem angelegt ist.

5. Elektrische Heizvorrichtung nach einem der vorherigen Ansprüche, **dadurch gekennzeichnet, dass** das wenigstens eine Leiterelement (10) mit dem Gehäuse (1) eine vormontierte Einheit ausbildet.

6. Elektrische Heizvorrichtung nach Anspruch 2, **dadurch gekennzeichnet, dass** das wenigstens eine Leiterelement (10) wenigstens ein aus einer Ebene des Blechstreifens herausgebogenes Rastelement (17) umfasst, über welches das wenigstens eine Leiterelement (10) mit dem Gehäuse (1) verbunden ist.

7. Elektrische Heizvorrichtung nach Anspruch 3, **dadurch gekennzeichnet, dass** das wenigstems eine Leiterelement (10) mit seiner Leiterelementbasis (15) an der Innenseite eines eine Luftdurchtrittöffnung begrenzenden Querholmes (11) des Gehäuses (1) anliegt.

8. Elektrische Heizvorrichtung nach einem der vorherigen Ansprüche, **dadurch gekennzeichnet, dass** das wenigstens eine Leiterelement (10) an einer Steuerseite des Gehäuses (1) vorgesehen ist, an der eine Steuereinrichtung an dem Gehäuse (1) befestigt ist und das wenigstens eine Leiterelement (10) mit einer Masseleitung verbunden ist, die zu der Steuereinrichtung führt.

9. Elektrische Heizvorrichtung nach einem der vorherigen Ansprüche, **dadurch gekennzeichnet, dass** das wenigstens eine Leiterelement (10) elektrisch an ein Massepotential insbesondere des Fahrzeugs anbindbar ist.

## Claims

1. Electrical heating device, in particular for a motor vehicle, with a housing (1), in which are accommodated at least one heat generating element (4) with at least one PTC element (20) and electrical strip conductors (21, 22) abutting oppositely situated lateral faces of the PTC element (20) and a plurality of heat dissipating elements (3) arranged in parallel layers, which are held abutted on oppositely situated sides of the at least one heat generating element (4) with the intermediate positioning of an electrical insulation (23), with at least one conducting element (10) which electrically connects together a plurality of heat dissipating elements (3) **characterised in that** the housing (1) is made of plastic.

2. Electrical heating device according to Claim 1, **characterised in that** the at least one conducting element (10) is formed from a sheet metal strip.

3. Electrical heating device according to Claim 1 or 2, **characterised in that** the at least one conducting element (10) comprises a conducting element base (15) extending transversely to the layers, and claws (12) which protrude from it and interact with the heat dissipating elements and extend parallel to the layers.

4. Electrical heating device according to Claim 3, **characterised in that** the claw (12) contacts the assigned heat dissipating element (3) in a plastically deforming manner.

5. Electrical heating device according to one of the preceding claims, **characterised in that** the at least one conducting element (10) forms a pre-assembled unit with the housing (1).

6. Electrical heating device according to Claim 2, **characterised in that** the at least one conducting element (10) comprises at least a latching element (17) which is bent out of a plane of the sheet metal strip and through which the at least one conducting element (10) is connected to the housing (1).

7. Electrical heating device according to Claim 3, **characterised in that** the at least one conducting element (10) with its conducting element base (15) contacts the inner side of a transverse spar (11) of the housing (1) delimiting an air passage aperture.

8. Electrical heating device according to one of the preceding claims, **characterised in that** the at least one conducting element (10) is provided on a control side of the housing (1) on which a control device is fixed to the housing (1) and the at least one conducting element (10) is connected to a ground conductor leading to the control device.

9. Electrical heating device according to one of the preceding claims, **characterised in that** the at least one conducting element (10) can be electrically connected to a ground potential, in particular of the vehicle.

## Revendications

1. Dispositif de chauffage électrique, en particulier pour un véhicule automobile, avec un boîtier (1) dans lequel sont agencés au moins un élément de production de chaleur (4) avec au moins un élément PTC (20) et, sur des surfaces latérales opposées à l'au moins un élément PTC (20), des pistes conductrices électriques adjacentes (21, 22) et plusieurs éléments dispensateurs de chaleur (3) agencés en couches parallèles, qui sont maintenus appliqués sur des côtés opposés de l'au moins un élément de production de chaleur (4), intercalés entre une isolation électrique (23), avec au moins un élément conducteur (10) qui connecte électriquement entre eux plusieurs éléments dispensateurs de chaleur (3),
**caractérisé en ce que** le boîtier est constitué en matière synthétique.

2. Dispositif de chauffage électrique selon la revendication 1, **caractérisé en ce que** l'au moins un élément conducteur (10) est constitué à partir d'une bande de tôle.

3. Dispositif de chauffage électrique selon la revendication 1 ou 2, **caractérisé en ce que** l'au moins un élément conducteur (10) comporte une base d'élément conducteur (15) qui s'étend transversalement par rapport aux couches, et des griffes (12) qui se projettent à partir de celle-ci et interagissent avec les éléments dispensateurs de chaleur, en s'étendant parallèlement aux couches.

4. Dispositif de chauffage électrique selon la revendication 3, **caractérisé en ce que** la griffe (12) est agencée en déformation plastique contre l'élément dispensateur de chaleur (3) associé.

5. Dispositif de chauffage électrique selon l'une des revendications précédentes, **caractérisé en ce que** l'au moins un élément conducteur (10) constitue une unité prémontée avec le boîtier (1).

6. Dispositif de chauffage électrique selon la revendication 2, **caractérisé en ce que** l'au moins un élément conducteur (10) comporte au moins un élément d'encliquetage (17) coudé de manière à sortir d'un plan de la bande de tôle, grâce auquel l'au moins un élément conducteur (10) est connecté au boîtier (1).

7. Dispositif de chauffage électrique selon la revendication 3, **caractérisé en ce que** l'au moins un élément conducteur (10) est agencé contre le boîtier (1) par sa base d'élément conducteur (15) du côté interne d'une traverse qui délimite une ouverture d'aération (11).

8. Dispositif de chauffage électrique selon l'une des revendications précédentes, **caractérisé en ce que** l'au moins un élément conducteur (10) est pourvu sur un côté de commande du boîtier (1), sur lequel un dispositif de commande est fixé au boîtier (1), et **en ce que** l'au moins un élément conducteur (10) est connecté à un conducteur de terre qui mène au dispositif de commande.

9. Dispositif de chauffage électrique selon l'une des revendications précédentes, **caractérisé en ce que** l'au moins un élément conducteur (10) peut être connecté électriquement à un potentiel de terre, et en particulier à un potentiel de terre du véhicule.
